# EUROPÄISCHE PATENTSCHRIFT

(11) **EP 1 742 819 B1**
(45) Veröffentlichungstag und Bekanntmachung des Hinweises auf die Patenterteilung: **28.05.2008**
(21) Anmeldenummer: 05733497.1
(22) Anmeldetag: 26.04.2005
(51) Int. Cl.: B60R 21/0136

(54) **VORRICHTUNG FAHRZEUG UND VERFAHREN ZUM ERKENNEN EINES AUFPRALLS EINES OBJEKTS AUF EINEN AUFPRALLORTSENSIERUNGSBEREICH EINES FAHRZEUGS**
DEVICE, VEHICLE, AND METHOD FOR IDENTIFYING THE COLLISION OF AN OBJECT ON A COLLISION LOCATION DETECTION REGION OF A VEHICLE
DISPOSITIF, VEHICULE ET PROCEDE POUR RECONNAITRE UNE COLLISION D'UN OBJET SUR UNE ZONE DE DETECTION D'EMPLACEMENT DE COLLISION D'UN VEHICULE

(30) Priorität: 07.05.2004 DE 102004022591
(43) Veröffentlichungstag der Anmeldung: 17.01.2007
(73) Patentinhaber: Continental Automotive GmbH, 30165 Hannover (DE)
(72) Erfinder: MADER, Gerhard, 93107 Thalmassing (DE)
(86) Internationale Anmeldenummer: PCT/EP2005/051852
(87) Internationale Veröffentlichungsnummer: WO 2005/110819

(56) Entgegenhaltungen:
- WO-A-03/082639
- DE-A1- 10 062 427

## Beschreibung

Die Erfindung betrifft sowohl eine Vorrichtung als auch ein Fahrzeug mit einer Vorrichtung zum Erkennen eines Aufpralls eines Objekts auf einen Aufprallortsensierungsbereich eines Fahrzeugs mit einem ersten und einem zweiten im wesentlichen abgeschlossenen Hohlkörper, die mit einem Teil der Fahrzeugkarosserie verbundenen sind, die mit ihrer Längsachse parallel zu einer Aufprallortsensierungsrichtung und im Aufprallortsensierungsbereich einander überlappend angeordnet sind und die so nahe an der Außenfläche des Fahrzeugs angeordnet sind, dass mindestens einer der Hohlkörper beim Aufprall komprimiert wird. Die Vorrichtung weist weiterhin einen ersten und zweiten Sensor zum Erfassen der Kompression des jeweils zugehörigen ersten bzw. zweiten Hohlkörpers auf, wobei an jedem Sensor ein für die jeweilige Kompression repräsentatives Signal abgreifbar ist, und außerdem eine Auswerteeinheit, der die beiden Signale zuführbar sind. Weiterhin betrifft die Erfindung ein entsprechendes Verfahren, bei dem ein solches Fahrzeug oder zumindest eine solche Vorrichtung eingesetzt wird.

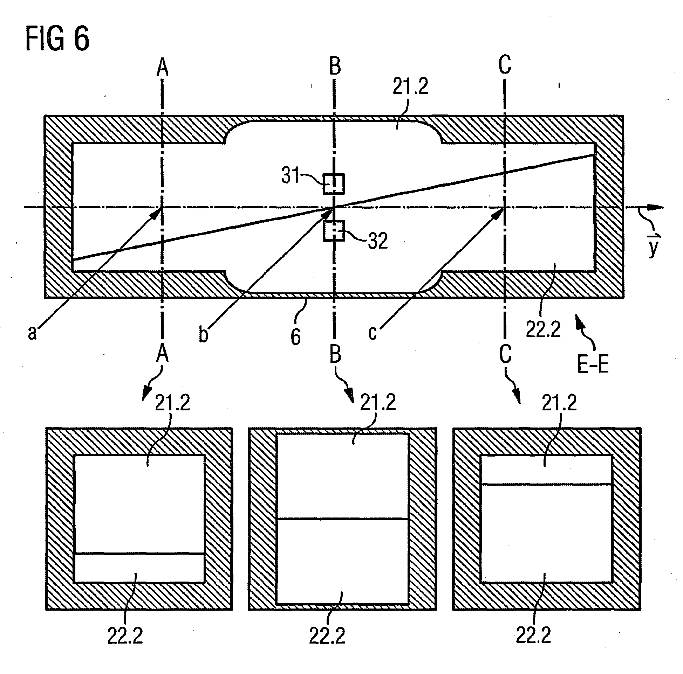

Eine solche Vorrichtung, ein solches Fahrzeug und ein solches Verfahren sind bekannt aus der Druckschrift WO 03/82639 A1, als nächstliegender Stand der Technik betrachtet. Dort ist eine Vorrichtung offenbart, (Seite 17, Zeilen 4 bis 13 und Figur 6), die entlang eines als Stoßfänger dienenden Teils der Außenverkleidung eines Fahrzeugs einander überlappende Hohlkörper aufweist, in denen jeweils Drucksensoren eingebracht sind, die ein aufprallendes Objekt, beispielsweise einen Fußgänger, durch den bei der Kompression des jeweiligen Hohlkörpers entstehen Druckanstieg erfassen können und in Form eines Signals an eine Auswerteeinheit melden können. Je nachdem, von welchem der Drucksensoren mehr oder weniger Signal an die Auswerteeinheit gemeldet wird, kann der entsprechende Aufprallort ermittelt werden. Abhängig von dem ermittelten Aufprall und gegebenenfalls zusätzlich abhängig von dem ermittelten Aufprallort soll beispielsweise eine Fußgängerschutzvorrichtung ausgelöst werden. Dabei kann der hintere Teil der Motorhaube des Kraftfahrzeugs angehoben werden, so dass der Abstand zwischen der Motorhaube und dem darunter liegenden Motor vergrößert wird und so der Aufprall des Kopfes des Fußgängers auf die Motorhaube sanfter erfolgt.

Eine solche Sensierungsvorrichtung kann selbstverständlich auch einen frühen Hinweis auf einen beginnenden schweren Aufprall und dessen Aufprallort an die Auswerteeinheit eines Insassenschutzsystems geben, welches dann beispielsweise die Auslöseschwelle eines den Fahrzeugaufprall erfassenden Beschleunigungssensors so beeinflusst, dass ein Insassenschutzmittel, beispielsweise ein Airbag oder ähnliches früher ausgelöst wird.

Je nach Genauigkeit, mit der der Aufprallort bestimmt werden soll, müssen bei der bekannten Vorrichtung um so mehr Hohlkörper mit jeweils einem Drucksensor in dem Stoßfänger angeordnet werden. Damit ist jedoch ein sehr hoher konstruktiver Aufwand sowie eine umfangreiche Verkabelung jedes Drucksensors mit der Auswerteeinheit verbunden. Außerdem ist ein sehr großer Aufwand zur Datenübermittlung an die Auswerteeinheit und zur Berechnung der größeren Anzahl von Einzelsignalen von den Drucksensoren in der Auswerteeinheit notwendig.

Aufgabe der vorliegenden Erfindung ist es, eine möglichst einfache Möglichkeit zum Erkennen eines Aufpralls auf ein Fahrzeug und des zugehörigen Aufprallorts auf der Fahrzeugkarosserie zu schaffen und die daraus gewonnenen Informationen einem Fußgängerschutzsystem oder einem Insassenrückhaltesystem zugänglich zu machen.

Die Aufgabe wird gelöst durch eine Vorrichtung gemäß Anspruch 1.

Die erfindungsgemäße Vorrichtung zum Erkennen eines Aufpralls eines Objekts auf einen Aufprallortsensierungsbereich eines Fahrzeugs längs einer Aufprallortsensierungsrichtung weist einen ersten und einen zweiten im wesentlichen abgeschlossenen Hohlkörper auf, die mit einem Teil der Fahrzeugkarosserie verbunden sind und die mit ihrer Längsachse parallel zur einer Aufprallortsensierungsrichtung und im Aufprallbereich überlappend angeordnet sind.

Der Aufprallortsensierungsbereich kann beispielsweise zumindest als Teil eines vorderen und/oder eines hinteren Stoßfängers und/oder einer Seitentüre des Fahrzeugs sein. Eine typische Aufprallortsensierungsrichtung ist dann beispielsweise die Längsrichtung des vorderen und/oder hinteren Stoßfängers und/oder die Richtung längs der Außenfläche einer Seitentür.

Zum Erfassen der Kompression der beiden Hohlkörper sind in jedem Hohlkörper je ein Sensor, beispielsweise ein Drucksensor zum Erfassen des mit der Kompression einhergehenden adiabatischen Druckanstiegs, angeordnet. Gegebenenfalls können solche Drucksensoren allerdings auch entfernt von dem Hohlkörper, jedoch verbunden damit beispielsweise über einen Druckkanal, angeordnet sein. Anstatt von Drucksensoren können auch beliebige andere Sensoren verwendet werden, beispielsweise Temperatursensoren, Sensoren mit Dehnungsmessstreifen, etc., die ein für die jeweilige Kompression des zugehörigen Hohlkörpers repräsentatives Signal liefert, das an eine Auswerteeinheit der Vorrichtung zugeführt werden kann.

Im wesentlichen abgeschlossen soll in diesem Zusammenhang ausdrücken, dass die erfindungsgemäßen Hohlkörper zumindest während der sehr kurzen Zeit eines Aufprallvorgangs auf ein Fahrzeug keinen Druckausgleich mit dem Umgebungsdruck ermöglichen, der die Signalamplituden der die Kompression erfassenden Sensoren in einem unerwünscht hohen Maß beeinflussen würde.

Erfindungsgemäß weist die Vorrichtung einen dem ersten Hohlkörper zugeordneten ersten konstruktiven Parameter und mindestens einen dem zweiten Hohlkörper zugeordneten zweiten konstruktiven Parameter auf, wobei sich mindestens einer der Parameter längs der Aufprallortsensierungsrichtung ändert, so dass der Quotient und/oder die Differenz der beiden Signale der Sensoren bei einem Aufprall desselben Objekts mit gleicher Geschwindigkeit auf verschiedene Aufprallorte längs der Aufprallortsensierungsrichtung im wesentlichen stetig zunimmt oder stetig abnimmt.

Die Erfindung beruht auf der Erkenntnis, dass ein Hohlkörper längs seiner Längsachse in Aufprallortsensierungsrichtung konstruktiv so ausgestaltet werden kann, oder so innerhalb des Fahrzeugs angeordnet werden kann, dass dasselbe, mit gleicher Geschwindigkeit aufprallende Objekt je nach Aufprallort im Aufprallortsensierungsbereich längs der Aufprallortsensierungsrichtung unterschiedliche Drucksignale hervorruft. In diesem Zusammenhang sei auf die bislang unveröffentlichte deutsche Patentanmeldung 10 2004 017 270 der Anmelderin hingewiesen, deren Inhalt als hier mit offenbart gelten soll.

Allein durch eine längs der Aufprallortsensierungsrichtung veränderte Form eines verwendeten Hohlkörpers könnte man folglich zumindest bei einem immer gleichen aufprallenden Objekt bei gleicher Aufprallgeschwindigkeit den Aufprallort entlang der Aufprallortsensierungsrichtung relativ genau bestimmen. Da in realen Aufprallsituationen jedoch in den meisten Fällen höchst unterschiedliche Objekte, beispielsweise Fußgänger, bewegte oder unbewegte Fahrzeuge, stationäre Aufprallobjekte wie Bäume, Mauern, ect., mit sehr unterschiedlichen Aufprallgeschwindigkeiten überwiegen, kann auf diese Weise ein Aufprallort nur sehr ungenau bestimmt werden, da nicht unterschieden werden kann, ob eine Signalamplitude durch einen bestimmten Aufprallort oder durch eine besonders große oder kleine Wucht des aufprallenden Objekts verursacht wird.

Verwendet man jedoch einen zweiten Hohlkörper längs derselben Aufprallortsensierungsrichtung, vorzugsweise einen Hohlkörper mit gleichem Volumen, der wiederum vorzugsweise sogar die gleiche Länge aufweist, so kann durch Verhältnisbildung der auf die Kompression beider Hohlkörper zurückgehenden Signale dieser unerwünschte Einfluss der Absolutwerte der beiden Einzelsignale vermieden werden. Je mehr sich die beiden Hohlkörper in ihren geometrischen Ausmaßen gleichen, je näher sie zueinander angeordnet sind und je mehr der Anbringungsort der beiden Hohlkörper in Aufprallortsensierungsrichtung überlappt, desto vergleichbarer sind die jeweiligen Sensorsignale für beide Hohlkörper, und desto größer ist daher die Aussagekraft des Verhältnisses beider Sensorsignale hinsichtlich des getroffenen Aufprallorts.

Weitere vorteilhafte Weiterbildungen der erfindungsgemäßen Vorrichtung sind in den Unteransprüchen angegeben.

Vorzugsweise handelt es sich bei dem in Aufprallortsensierungsrichtung veränderlichen Parameter um die Querschnittfläche eines Hohlkörpers längs der Aufprallortsensierungsrichtung. Beispielsweise nimmt die Querschnittsfläche des ersten Hohlkörpers in Richtung der Aufprallortsensierungsrichtung zu, während die vergleichbare Querschnittsfläche des zweiten Hohlkörpers in derselben Richtung gleich bleibt oder abnimmt. Je größer die Querschnittsfläche senkrecht zur Aufprallortsensierungsrichtung ist, desto größer ist üblicherweise auch der Druckanstieg, wenn die durch ein aufprallendes Objekt bewirkte Kompression des zugehörigen Hohlkörpers in der Nähe dieser großen Querschnittsfläche erfolgt. Für eine kleine Querschnittsfläche gilt das entsprechend umgekehrte. Ändert sich folglich mindestens eine der Querschnittsflächen längs der Aufprallortsensierungsrichtung oder ändern sich vorzugsweise sogar beide Querschnittsflächen gegenläufig, so weist der Quotient der Signale der Sensoren für unterschiedliche Aufprallorte im Idealfall jeweils einen unterschiedlichen Wert auf.

Eine unterschiedliche Querschnittsfläche mindestens eines der Hohlkörper längs der Aufprallortsensierungsrichtung ist dabei eine sehr einfache konstruktive Maßnahme: beispielsweise können die Hohlkörper gespritzte Kunststoffteile sein. Solche Kunststoffteile können einfach in fast beliebigen Formen preisgünstig hergestellt werden.

Da der für die Ortsauflösung unerwünschte Einfluss der Absolutsignale der Sensoren durch die Verhältnisbildung beseitigt wird, könne vorteilhafterweise relativ kostengünstige Absolutwertsensoren verwendet werden, beispielsweise Absolutdrucksensoren. Ein weiterer Vorteil daran ist außerdem, dass neben der Ortsbestimmung des Aufpralls dennoch weiterhin das gesamte absolute Sensorsignal ausgewertet werden kann, das durch den Aufprall hervorgerufen wird, beispielsweise durch eine Summenbildung der beiden Einzelsignale. Darüber hinaus kann beispielsweise auch das Absolutsignal des einen Sensors mit dem Absolutsignal des jeweils anderen Sensors verglichen werden, um die Plausibilität der beiden Sensorsignale zu überprüfen. Der eine Sensor kann dem jeweils anderen Sensor auf diese Weise also als Safing-Sensor dienen.

Bei einer weiteren vorteilhaften Ausführungsform der Erfindung ist ein Parameter eines Hohlkörpers die Steifigkeit des Gehäuses des Hohlkörpers. Die Steifigkeit des Gehäuses wird in erster Linie bestimmt durch die Form und die Materialbeschaffenheit des Gehäuses eines Hohlkörpers. Die Steifigkeit des Gehäuses eines Hohlkörpers bestimmt die Kraft, die auf das Gehäuse des Hohlkörpers einwirken muss, damit er deformiert wird. Folglich ist für die Kompression des Hohlkörpers die Steifigkeit entscheidend. Variiert die Steifigkeit des Gehäuses in Aufprallortsensierungsrichtung so ist ein höherer Signalanstieg für Aufprallorte in der Nähe von Stellen geringerer Steifigkeit zu erwarten. Verändert sich der gleiche Parameter des benachbarten Hohlkörpers nicht oder gegenläufig dazu, so ist bei einer Verhältnisbildung der Signale der beiden Sensoren der Ort des Aufpralls eines Objekts in Aufprallortsensierungsrichtung leicht feststellbar.

Eine alternative Ausführungsform für einen erfindungsgemäßen Gegenstand, mit dem die Aufgabe ebenfalls gelöst wird, ist in Anspruch 11 angegeben.

Das dort angegebene erfindungsgemäße Fahrzeug weist eine Vorrichtung gemäß dem Oberbegriff des Anspruchs 1 auf, wobei nicht unbedingt die Vorrichtung einen veränderlichen Parameter in Aufprallortsensierungsrichtung aufweist; vielmehr weist das Fahrzeug einen in Aufprallortsensierungsrichtung veränderlichen Parameter auf, der einer solchen Vorrichtung ggf. zusätzlich zugeordnet ist. Üblicherweise handelt es sich bei einem solchen Parameter des Fahrzeugs um einen Parameter der Fahrzeugkarosserie, wie im folgenden erläutert wird.

Bei einer vorteilhaften Ausführungsform eines erfindungsgemäßen Fahrzeugs wird die Steifigkeit des Teils der Fahrzeugkarosserie im Aufprallbereich längs der Aufprallortsensierungsrichtung verändert. Ist der Hohlkörper beispielsweise in einem Stoßfänger angeordnet so wird die Verformbarkeit des Hohlkörpers erheblich durch die Steifigkeit der Fahrzeugkarosserie im Aufprallbereich beeinflusst: Je steifer die Fahrzeugkarosserie ausgebildet ist desto schwerer ist der darin befindliche Hohlkörper deformierbar. Wird die Steifigkeit der Fahrzeugkarosserie in Aufprallortsensierungsrichtung verändert so wird dadurch die Kraft verändert, die zur Deformation des im Aufnahmekörper angeordneten Hohlkörpers aufgebracht werden muss.

Die Möglichkeit zur Verwendung von Absolutwertsensoren, insbesondere die Verwendung von Absolutdrucksensoren, und die Vorteile daraus bestehen gleichermaßen für die erfindungsgemäße Vorrichtung als auch ein erfindungsgemäßes Fahrzeug.

Weitere vorteilhafte Weiterbildungen der erfindungsgemäßen Vorrichtung und des erfindungsgemäßen Fahrzeugs sind in den Unteransprüchen angegeben.

Eine Möglichkeit, die Steifigkeit eines Gehäuses eines Hohlkörpers oder die Steifigkeit eines Fahrzeigkarosserieteils im Aufprallbereich in Aufprallortsensierungsrichtung zu verändern, ist beispielsweise eine sich verändernde Wanddicke des Gehäuses oder des Karosserieteils. Gerade bei einem Gehäuse oder bei einem Karosserieteil, beispielsweise einer Stoßstange, aus gespritztem Kunststoff ist dies besonders einfach herzustellen. Alternativ können gezielt Verstrebungen oder Versteifungselemente am Gehäuse oder an der Fahrzeugkarosserie angebracht werden, vorzugsweise einteilig damit. Auch letzteres kann bei einem gespritzten Kunststoffgehäuse besonders einfach umgesetzt werden.

Gerade bei gespritzten Kunststoffteilen können längs der Aufprallortsensierungsrichtung auch Materialbeimischungen verändert werden, um die Steifigkeit des Gehäuses eines Hohlraums und/oder der Fahrzeugkarosserie im Aufprallbereich zu verändern. Dies ist üblicherweise jedoch mit einem größeren Aufwand bei der Herstellung verbunden.

Da bei einer Ausführungsform der Weiterbildung einer erfindungsgemäßen Vorrichtung oder eines erfindungsgemäßen Fahrzeugs zumeist zwei nahe benachbarte Hohlkörper verwendet werden, muss bei der konstruktiven Ausgestaltung mit besonderer Vorsicht darauf geachtet werden, dass sich die zur Kompression eines Hohlkörpers notwendige Kraft durch eine gezielte Veränderung der Steifigkeit eines Hohlkörpergehäuses oder der Fahrzeugkarosserie längs der Aufprallortsensierungsrichtung zwar einerseits verändern werden soll, sich die entsprechende Kraft zur Kompression des zweiten Hohlkörpers gleichzeitig aber kaum oder gegenläufig verändern soll.

Es soll hier angemerkt werden, dass bei einer gezielten Versteifung des Gehäuses eines Hohlkörpers oder der Fahrzeugkarosserie im Aufprallbereich außerdem immer darauf zu achten ist, die Karosseriestruktur keinesfalls auf eine im Falle eines Fußgängeraufpralls gefährliche Weise verändert werden darf: Manche Kanten der Karosserie sind beispielsweise gezielt abgerundet; an manchen Stellen sind in der Fahrzeugkarosserie nachgiebige Kunststoffe eingebracht, um das Verletzungsrisiko für einen Fußgänger zu mindern. Solche Vorkehrungen sollen durch die Gestaltung der Gehäuse der Hohlkörper oder der Fahrzeugkarosserie keinesfalls zum Nachteil für den Fußgängerschutz beeinträchtigt werden.

Besonders kostengünstig und daher vorteilhaft ist ein einteilig mit der Fahrzeugkarosserie, beispielsweise einteilig mit dem Stoßfänger, ausgebildeter Hohlkörper. Der Stoßfänger ist dabei beispielsweise nicht nur mit einem Hohlkörper oder beiden Hohlkörpern verbunden, sondern dient selbst zumindest als ein Teil eines Hohlkörpers oder beider Hohlkörper, beispielsweise als Teil einer Gehäusewand.

Vorzugsweise sollte mindestens einer der Parameter mindestens eines Hohlkörpers oder der Fahrzeugkarosserie entlang der Aufprallortsensierungsrichtung stetig zunehmen oder abnehmen, während beispielsweise ein entsprechend zweiter Parameter des zweiten Hohlkörpers oder der Fahrzeugkarosserie gleich bleibt oder wiederum vorzugsweise gegenläufig dazu stetig abnimmt oder zunimmt. Durch die Stetigkeit der Ab- bzw. Zunahme mindestens einer der Parameter eines Hohlkörpers oder der Fahrzeugkarosserie nehmen nämlich im Idealfall auch die beiden Signale bei einem Aufprall desselben Objekts mit gleicher Geschwindigkeit auf verschiedene Aufprallorte längs der Aufprallortsensierungsrichtung im wesentlichen stetig zu bzw. ab. Die Auswertung von stetigen Signalen ist im Regelfall erheblich einfacher die Auswertung von unstetigen Signalen. Ändert sich der zweite Parameter zusätzlich gegenläufig zum ersten Parameter, so wird eine höhere Änderung des Quotienten und/oder der Differenz der Sensorsignale längs der Aufprallortsensierungsrichtung und dadurch eine höhere Ortsauflösung der Vorrichtung erreicht.

An dieser Stelle ist darauf hinzuweisen, dass die kennzeichnenden Merkmale der beiden alternativen Ausführungsformen der Erfindung gemäß den unabhängigen Vorrichtungsansprüchen sowie deren vorteilhafte Weiterbildungen in jeder sinnvollen Kombination miteinander zur Anwendung kommen können. Beispielsweise könnte sich gleichzeitig der Querschnitt eines Hohlkörpers in Aufprallortsensierungsrichtung und die Steifigkeit desselben Hohlkörpers ändern und außerdem die Steifigkeit des Teils der Fahrzeugkarosserie im Aufprallbereich, der die Hohlkörper aufnimmt. Es bleibt einem Fachmann überlassen, eine vorteilhafte Kombination solcher Merkmale für eine konkrete Ausgestaltung einer erfindungsgemäßen Vorrichtung oder eines erfindungsgemäßen Fahrzeugs entsprechend den jeweiligen Anforderungen und konstruktiven Gegebenheiten auszuwählen.

Die Aufgabe der vorliegenden Erfindung wird weiterhin gelöst durch ein Verfahren gemäß Anspruch 14.

Vorteilhafte Weiterbildungen der erfindungsgemäßen Verfahren sind in den Unteransprüchen angegeben.

Nachfolgend sind vorteilhafte Ausführungsformen und Weiterbildungen einer erfindungsgemäßen Vorrichtung anhand von schematischen Darstellungen beschrieben. Es zeigen:
- Figur 1: eine Draufsicht auf ein Kraftfahrzeug mit einem vorderen Stoßfänger und einer erfindungsgemäßen Vorrichtung mit einem ersten Drucksensor und einem zweiten Drucksensor innerhalb eines mit durchgezogener Linie eingezeichneten ersten Hohlkörpers bzw. innerhalb eines strichliert eingezeichneten zweiten Hohlkörpers,
- Figur 2: einen Querschnitt durch die erfindungsgemäße Vorrichtung aus Figur 1 entlang der Schnittlinie E-E,
- Figur 3: eine schematische Darstellung der Signalverläufe der beiden Drucksensoren für verschiedene Aufprallorte bei einer erfindungsgemäßen Vorrichtung, aufgetragen gegen die Zeit,
- Figur 4: eine schematische Darstellung des Verlaufs des Verhältnisses der Signale beider Sensoren aufgetragen gegen die Aufprallortsensierungsrichtung,
- Figur 5: eine Querschnittsdarstellung wie in Figur 1 mit einer alternativen Ausführungsform für erfindungsgemäße Hohlkörper,
- Figuren 6 und 7: schematische Querschnittsdarstellungen vorteilhafter weiterer Ausführungsformen von erfindungsgemäßen Hohlkörpern entlang der Schnittlinie E-E aus Figur 1 und
- Figur 8: ein Ausführungsbeispiel für ein erfindungsgemäßes Verfahren.

Elemente gleicher Funktion oder Konstruktion sind figurenübergreifend mit denselben Bezugszeichen gekennzeichnet.

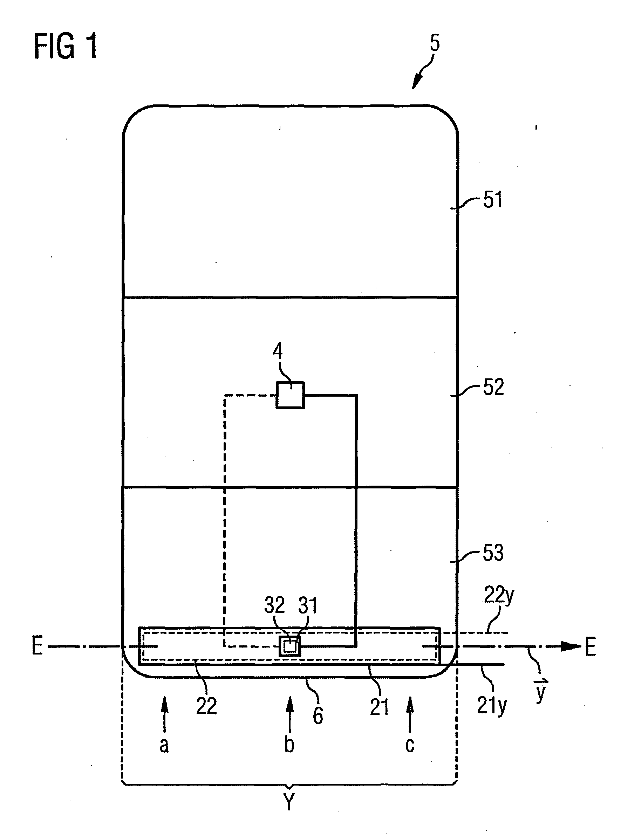

Figur 1 zeigt eine Draufsicht auf ein Karosserie eines Kraftfahrzeugs 5 mit einer Heckpartie 51 einer Fahrgastzelle 52 und einer Frontpartie 53. Der von der Fahrgastzelle 52 abgewandte vordere Abschlussbereich der Frontkarosserie 53 bildet einen Stoßfänger 6, der bei Fahrzeugen neueren Bautyps zumeist aus sehr leicht deformierbaren Plastikteilen besteht, die als formschöne Ergänzung zum äußeren Erscheinungsbild des Kraftfahrzeuges beitragen. Der Stoßfänger 6 geht von seiner vordersten Begrenzungsfläche des Kraftfahrzeugs 5 zu seinen Seiten hin gekrümmt in die Fahrzeugseiten über. Der Stoßfänger 6 bildet hier zugleich den Aufprallortsensierungsbereich Y. Hinter dem Stoßfänger 6, ggf. als integraler Bestandteil davon, sind zwei Hohlkörper 21 und 22 dargestellt, wobei der zweite, strichliert eingezeichnete Hohlkörper 21 in der Darstellung der Figur 1 vollständig durch den ersten, in durchgezogener Linie eingezeichneten Hohlkörper 21 überdeckt wird. Ebenfalls strichliert bzw. in durchgezogener Linie eingezeichnet ist ein zweiter Drucksensor 32 innerhalb des zweiten Hohlkörpers 21 und ein erster Drucksensor 31 innerhalb des ersten Hohlkörpers 21. Die Aufprallortsensierungsrichtung y verläuft senkrecht zur Fahrtrichtung des Fahrzeugs längs des Stoßfängers 6. Entlang dieser Aufprallortsensierungsrichtung y erstrecken sich die beiden erfindungsgemäßen Hohlkörper 21 und 22 in ihrer maximalen Ausdehnung, ihre jeweiligen Längsachsen 21y und 22y verlaufen parallel zur Aufprallortsensierungsrichtung y.

Über eine in durchgezogener Linie bzw. strichliert eingezeichnete Verbindungsleitung können der erste und der zweite Drucksensor 31, 32 Signale ps₃₁ und ps₃₂ an eine zentrale Steuereinheit 4 liefern, die mittig im Kraftfahrzeug 5 im Bereich der Fahrgastzelle 52 angeordnet ist, bevorzugt unter der Mittelkonsole in mechanisch fester Kopplung an das Fahrzeugchassis. Die Steuereinheit 4 enthält signalauswertende Elektronik, weshalb sie auch als Auswerteeinheit dient, und Steuerelektronik zum Auslösen eines Fußgängerschutzmittels oder eines Insassenschutzmittels.

Um drei verschiedene Aufprallorte auf dem Stoßfänger 6 zu definieren, sind Bereiche a und c an der linken bzw. der rechten Seite des Stoßfängers 6 dargestellt. Mittig dazwischen liegt ein Aufprallbereich b.

Bei einer Kompression der Hohlkörper 31 und 32, hervorgerufen durch einen Aufprall eines Objekts auf einen der Aufprallbereiche a, b, c, erfassen die Drucksensoren 31 und 32 den dabei entstehenden Druckanstieg, wandeln ihn jeweils in ein Signal und melden ihn jeweils mittel eines geeigneten Übertragungsprotokolls über die jeweiligen Verbindungsleitungen an die zentrale Steuereinheit 4. Dort wird entsprechend einer geeigneten Berechnungsformel das Verhältnis V der beiden Signale ps₃₁ und ps₃₂ zueinander berechnet und die Auslösung eines Insassenschutzmittels oder eines Fußgängerschutzmittels davon abhängig gemacht.

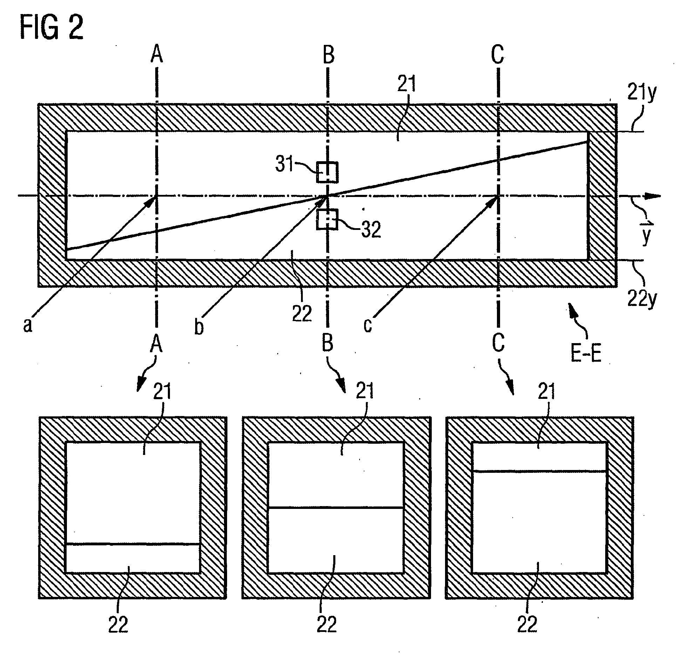

Die Aufprallortsensierungsrichtung y fällt mit einer Schnittlinie E-E zusammen. Ein Querschnitt durch die erfindungsgemäßen Hohlkörper 21, 22 ist in Figur 2 dargestellt. Die beiden Hohlkörper 21 und 22 sind benachbart zueinander angeordnet und bilden zusammen einen länglichen Quader, der seine längste räumliche Ausdehnung längs der Aufprallortsensierungsrichtung y aufweist. In einem spitzen Winkel zur Aufprallortsensierungsrichtung durchläuft eine gemeinsame Trennwand den Quader längs seiner gesamten Länge und trennt dadurch die beiden Hohlkörper 21 und 22 als getrennte Messvolumina voneinander ab.

Das erste Hohlkörper 21 bildet somit ein dreidimensionales Trapezoid mit einer größten Querschnittsfläche an seinem einen Ende und einer kleinsten Querschnittsfläche an seinem anderen Ende. Der zweite Hohlkörper 22 bildet ebenfalls ein Trapezoid mit einer größten und einer kleinsten Querschnittsfläche auf den entsprechend gegenüberliegenden Enden verglichen mit den Querschnittsflächen des ersten Hohlkörpers 21. Der untere Teil der Figur 2 zeigt drei Querschnitte entlang einer ersten, zweiten und dritten Schnittlinie A-A, B-B, C-C längs der beiden Hohlkörper 21 und 22. Die Querschnittsflächen liegen dabei senkrecht zur Aufprallortsensierungsrichtung.

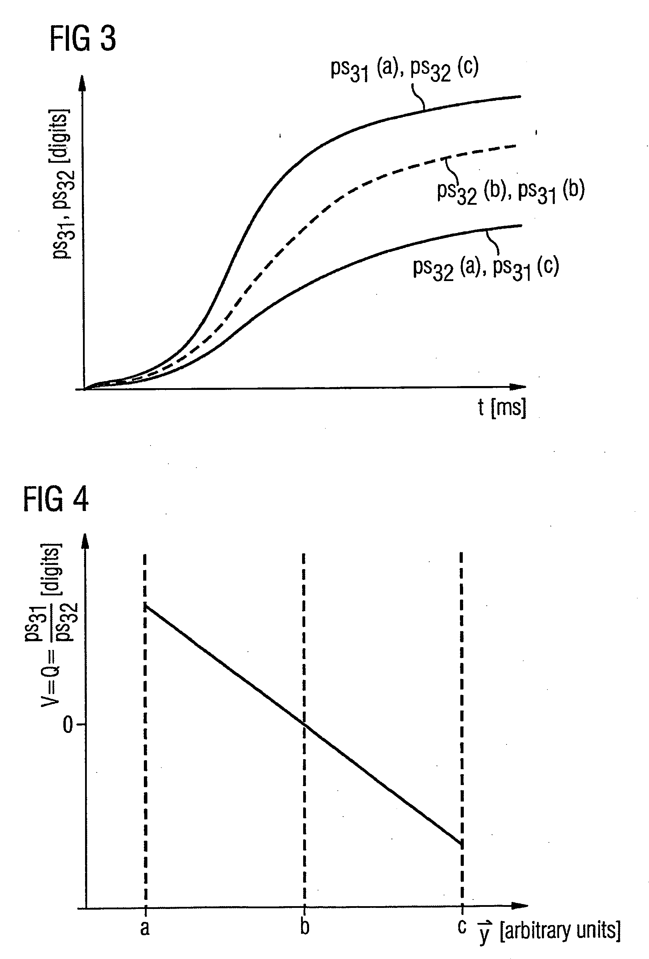

Figur 3 zeigt den jeweiligen prinzipiellen Verlauf des Signals ps₃₁ und des Signals ps₃₂ der Drucksensoren 31 und 32 für Aufpralle auf die Aufprallbereiche a, b, c der Figuren 1 und 2. Die Signale sind in willkürlichen Einheiten (digits) gegen die Zeit t in ms aufgetragen. Die Signale ps₃₁ und ps₃₂ beider Drucksensoren 31, 32 steigen unabhängig vom jeweiligen Aufprallort a, b, c ab einem anfänglichen Zeitpunkt t=0 zunächst mit geringer Steigung an. Die Steigung erhöht sich im Laufe der Zeit t bis sich alle gezeigten Signalverläufe wieder abflachen. Allerdings ist die maximale Steigung und die maximale Signalamplitude in dem gezeigten Zeitausschnitt für jeden der beiden Sensoren 31 und 32 und je nach Aufprallort a, b, c zumeist sehr unterschiedlich: Bei einem Aufprallort a weist das erste Messvolumen 21 seine größte Querschnittsfläche auf (entlang der Schnittlinie A-A) und das Signal ps₃₁(a) erreicht infolgedessen bei einem dortigen Aufprall sowohl seine maximale Steigung als auch seine maximale Signalamplitude. Bei einem Aufprallort c, in dessen Nähe die Querschnittsfläche (entlang der Schnittlinie C-C) des ersten Hohlkörpers 21 am kleinsten ist, ist sowohl die Steigung als auch die Signalamplitude des zugehörigen Signals ps₃₁(c) zu jedem Aufprallzeitpunkt t geringer. Entsprechend umgekehrt erreicht die Steigung des Signals ps₃₂(c)des zweiten Sensors 32 im zweiten Hohlkörper 32 bei einem Aufprallort c sowohl seine größte Steigung als auch die größten Signalamplituden, während das Signal ps₃₂(a) desselben Sensors 32 bei einem Aufprallort a, an dem der Hohlkörper 22 eine vergleichsweise kleinere Querschnittsfläche aufweist, die geringsten Steigungs- und Amplitudenwerte. Bei einem Aufprallort b mittig zwischen den jeweiligen Enden der beiden Hohlkörper 21 und 22 in Aufprallortsensierungsrichtung weisen die beiden Signale ps₃₂(b) und ps₃₁(b) im hier gezeigten Idealfall nahezu gleiche Signalamplituden und Steigungen auf, da die beiden Querschnittsflächen der beiden Hohlkörper 21 und 22 dort im gezeigten Idealfall gleich sind.

Figur 4 zeigt einen schematischen Verlauf einer möglichen Berechnungsformel für einen Verhältniswert V der Signale ps₃₁, ps₃₂ beider Sensoren 31 und 32 aufgetragen gegen die Aufprallortsensierungsrichtung y. Der wird hier einfach durch den Quotient Q aus dem Signal ps₃₁ des ersten Drucksensors 31 und dem zweiten Signals ps₃₂ des zweiten Drucksensors 32 gebildet. Entsprechend den schematischen Signalverläufen der Figur 3 weist der Quotient Q an einem Aufprallort a einen maximalen Wert auf und nimmt linear ab bis er einen geringsten Wert bei dem Aufprallort c aufweist. In dem dargestellten Beispiel ist folglich der Zusammenhang zwischen dem Quotient Q der Signale ps₃₁, ps₃₂ der beiden Drucksensoren 31, 32 nicht nur stetig sondern linear und damit besonders leicht auswertbar. Anstatt des aufgetragenen Quotienten Q könnten allerdings auch andere Berechnungsformeln für das Verhältnis V verwendet werden. Beispiele dafür sind im Ablaufdiagramm eines Ausführungsbeispiels für ein erfindungsgemäßes Verfahren in der Figur 6 dargestellt.

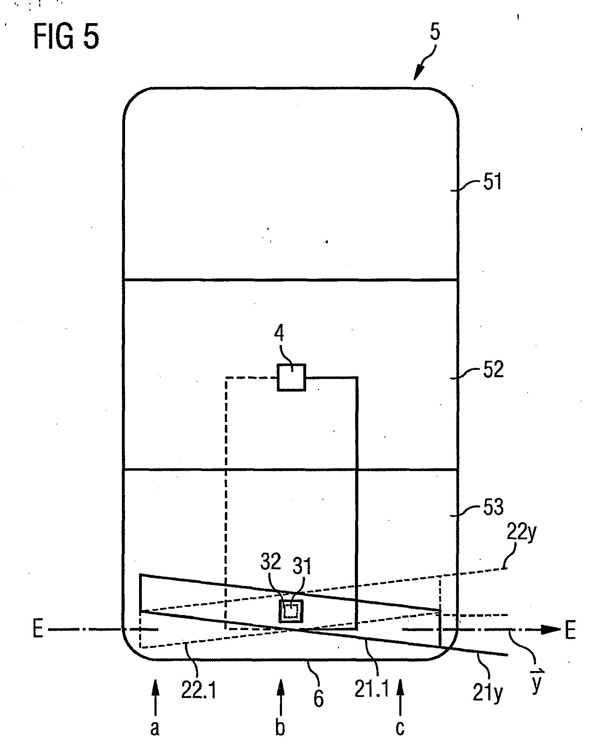

Figur 5 zeigt ein weiteres Ausführungsbeispiel für eine erfindungsgemäße Vorrichtung. Dargestellt ist der bereits in Figur 1 gezeigte Querschnitt durch ein Kraftfahrzeug 5 in Draufsicht. Wie in Figur 1 verläuft der dargestellte Querschnitt durch einen ersten Hohlkörper 21.1, der mit durchgezogener Linie dargestellt ist. Relativ zum dargestellten Querschnitt liegt darunter der strichliert eingezeichnete zweite Hohlkörper 22.1. Im Unterschied zur Figur 1 sind die beiden Hohlkörper 21.1 und 22.1 gewinkelt zur Querschnittsebene angeordnet. Im Unterschied zu dem Hohlkörper 21.1 und 22.1 der Figuren 1 und 2 sind die beiden Hohlkörper 21.1 und 22.1 nicht trapezoidförmig, sondern besitzen längs der Aufprallortsensierungsrichtung y jeweils gleiche Querschnittsflächen.

Der erfindungsgemäße erste Parameter des ersten Hohlkörpers 21.1 und der erfindungsgemäße zweite Parameter des zweiten Hohlkörpers 22.1 werden hier jeweils durch den Abstand zur Außenfläche des Stoßfängers 6 gebildet. Beide Parameter ändern sich längs der Aufprallortsensierungsrichtung, dass heißt ihr jeweiliger Abstand zur Außenfläche des Stoßfängers 6 ändert sich längs der Aufprallortsensierungsrichtung y. An einem Aufprallort a ist der Hohlkörper 21.1 im Mittel weiter von dem Stoßfänger 6 entfernt. Deshalb muss dort mehr Kraft aufgebracht werden bis sich auch der erste Hohlkörper 21.1 in der Nähe dieses Aufprallorts a deformiert. An einem Aufprallort c ist dagegen dieser Abstand des ersten Hohlkörpers 21.1 im Mittel geringer als am Aufprallort a. Ein aufprallendes Objekt muss dort mit weniger Kraft auf das Kraftfahrzeug einwirken, bis sich in der Nähe des Aufprallorts c das erste Messvolumen 21.1 deformiert. Entsprechend sind bei einem gleichen aufprallenden Objekt mit gleicher Geschwindigkeit die Signale ps₃₁ des Drucksensors 31 im Hohlkörper 21.1 bei einem Aufprallort c größer als bei einem Aufprallort a. Für den zweiten Hohlkörper 21.1 gilt das entsprechend umgekehrte: Der zugehörige zweite Drucksensor 32 liefert kleinere Signale ps₃₂(c) bei einem Aufprallort c und größere Signale ps₃₂(a) bei einem Aufprallort a.

Aus einer Verhältnisbildung der beiden Signale ps₃₁ und ps₃₂ kann die mit den beiden Sensoren 31 und 32 verbundene zentrale Steuereinheit 4 wiederum Informationen über den Aufprallort auf dem Stoßfänger 6 ableiten. Im gezeigten Ausführungsbeispiel müssen aber natürlich nicht beide Hohlkörper 21.1, 22.1 gewinkelt zur Aufprallortsensierungsrichtung y angeordnet sein. Entscheidend ist wiederum lediglich, dass mindestens ein konstruktiver Parameter sich längs der Aufprallortsensierungsrichtung ändert. Beispielsweisewürde es für eine erfindungsgemäße Ausführungsform genügen, falls nur ein Hohlkörper 21.1 oder 22.1 gewinkelt angeordnet wäre. Aus beliebigen sinnvollen Kombinationen weiterer vorliegend genannter Merkmale können weitere vorteilhafte Ausführungsformen abgeleitet werden.

Figur 6 zeigt eine Weiterbildung von erfindungsgemäßen Hohlkörpern in der gleichen Querschnittsdarstellung wie die der Figur 2. Im Unterschied zur Figur 2 weisen die beiden Hohlkörper 21.2 und 22.2 um den mittleren Bereich zwischen ihren beiden Enden in Längsrichtung Ausbuchtungen auf, die die zugehörigen Querschnittsflächen beider Hohlkörper 21.2 und 22.2 in diesem Längsabschnitt erheblich vergrößern. Eine solche gezielte Vergrößerung von beiden Hohlkörpern 21.2 und 22.2 kann vor allem dann sinnvoll sein, wenn in dem Bereich um die Querschnittsvergrößerung der beiden Hohlkörper 21.2 und 22.2 der umgebende Stoßfänger 6 eine besonders große Steifigkeit aufweist, beispielsweise durch eine Montageaufnahme des Kraftfahrzeugkennzeichens oder ähnliches. Die Vergrößerung der beiden Querschnitte der beiden Hohlkörper 21.2 und 22.2 bewirkt, dass trotz dieser zusätzlichen Versteifung bei einer gleichen Krafteinwirkung durch ein aufprallendes Objekt dennoch ein ähnlich großes Signal an den beiden Drucksensoren 31 und 32 hervorgerufen wird wie ohne' diese Versteifung und ohne vergrößerte Querschnittsflächen. Im Idealfall kann die gezeigte gezielte Vergrößerung der beiden Querschnittsflächen der Hohlkörper 21.2 und 22.2 dazu beitragen, dass auch weiterhin eine Auftragung eines Quotienten Q gegen den Aufprallort y eines Objekts gemäß Figur 4 bleibt.

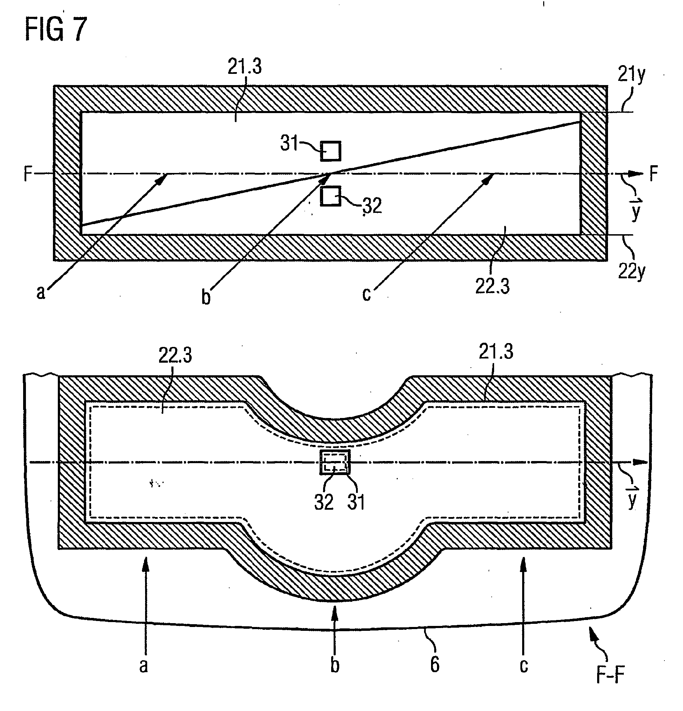

Figur 7 zeigt eine weitere vorteilhafte Weiterbildung der in den Figuren 1 und 2 dargestellten erfindungsgemäßen Hohlkörpern 21, 22. Wie für die Figur 6 wird für die Figur 7 angenommen, dass in der Nähe des Aufprallorts b eine Versteifung der Fahrzeugkarosserie besteht.

In der dargestellten Ausführungsform weisen beide Hohlkörper 21.3 und 22.3, die in der Schnittebene entlang der Schnittlinie E-E die aus der Figur 2 bekannten Formen auf. In der Schnittebene entlang der Schnittlinie F-F weisen sie jedoch jeweils eine Auswölbung in Richtung des Aufprallorts b auf. Durch diese Auswölbung ist die auf die Fahrzeugkarosserie am Aufprallort b aufzubringende Kraft, um eine gewünschte Kompression der beiden Hohlkörper 21.3 und 2 zu erhalten, geringer, da dort die Distanz zwischen der Außenfläche des Stoßfängers 6 und den zu deformierenden Hohlkörpern 21.3, 22.3 geringer ist und damit weniger Zwischenmaterial zwischen Stoßfänger 6 und den beiden Hohlkörpern 21.3 und 22.3 eingedrückt muss, um die beiden Hohlkörper 21.3 und 22.3 zu deformieren.

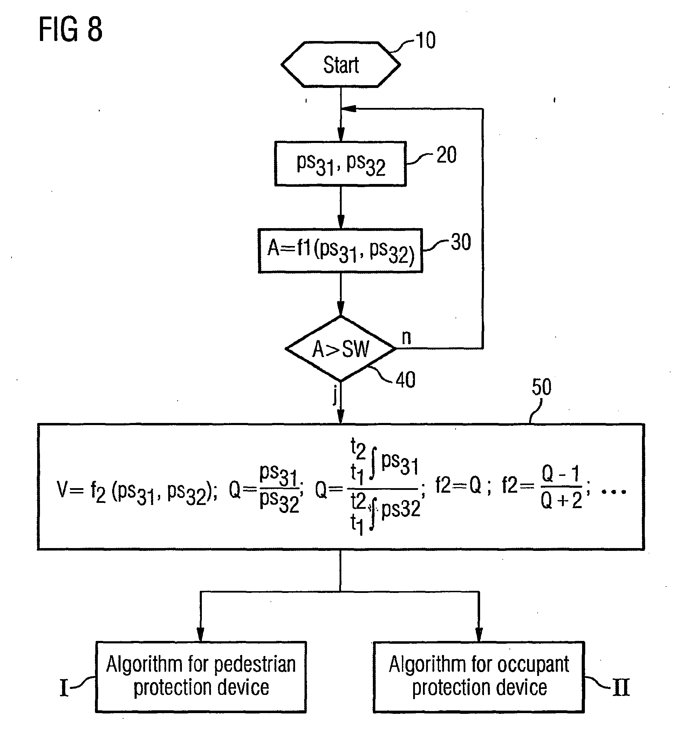

Figur 8 zeigt ein schematisches Ablaufdiagramm für ein erfindungsgemäßes Verfahren. In einem ersten Verfahrensschritt 10, beispielsweise nach dem Verbinden der erfindungsgemäßen Vorrichtung mit einer Spannungsversorgung (nicht dargestellt) und nach einer kurzen Hochlaufzeit werden in einem zweiten Verfahrensschritt 20 die Signale ps₃₁, ps₃₂ der beiden Drucksensoren 31 und 32 durch die zentrale Steuereinheit 4 aufgenommen. Dort wird in einem weiteren Verfahrensschritt 30 ein Wert A aus einem funktionalen Zusammenhang f₁ (ps₃₁, ps₃₂) gewonnen, beispielsweise aus einer Summe beider Signale ps₃₁, ps₃₂, aus einem Integral oder Summen von Integralen der beiden Signale ps₃₁, ps₃₁ über einen definierten Zeitraum etc., der in einem weiteren Verfahrenschritt 40 mit einem in einem Speichermittel der zentralen Steuereinheit 4 gespeicherten Schwellwert SW verglichen wird.

Übersteigt der Wert A den Schwellwert SW nicht, so wird der Verfahrensablauf dort abgebrochen, weitere Signale ps₃₁, ps₃₂ gemäß Verfahrensschritt 20 aufgenommen und die Berechnung gemäß Verfahrensschritt 30 erneut begonnen. Überschreitet der Wert A jedoch den Schwellwert SW so wird im Verfahrensschritt 50 ein Verhältniswert V aus einem funktionalen Zusammenhang f₂ (ps₃₁, ps₃₂) gewonnen. Der funktionale Zusammenhang f₂ kann durch unterschiedliche Formeln beschrieben werden, beispielsweise gemäß den in der Figur 8 dargestellten Formeln.

Nachfolgend wird der Wert V, der in funktionalem Zusammenhang mit dem Ort des Aufpralls, entweder einer ersten Auswerteroutine I zur Berechnung der Auslöseentscheidung eines Fußgängerschutzmittels (pedestrian protection device) und einem weiteren Berechnungsabschnitt II zur Berechnung der Auslösung eines geeigneteren Insassenschutzmittels (occupant protection device) zugeführt. Abhängig von den Ergebnissen in den beiden Berechnungsabschnitten I und II wird nachfolgend die Auslösung eines Fußgängerschutzmittels und/oder eines Insassenschutzmittels durch die zentrale Steuereinheit veranlasst.

## Patentansprüche

1. Vorrichtung zum Erkennen eines Aufpralls eines Objekts auf einen Aufprallortsensierungsbereich (Y) eines Fahrzeugs (5)
- mit einem ersten und einem zweiten im wesentlichen abgeschlossenen Hohlkörper (21, 22; 21.2, 22.2; 21.3, 22.3),
- die mit einem Teil (6) der Fahrzeugkarosserie verbundenen sind,
- die mit ihrer Längsachse parallel zu einer Aufprallortsensierungsrichtung (y) und im Aufprallortsensierungsbereich einander überlappend angeordnet sind und
- die so nahe an der Außenfläche des Fahrzeugs angeordnet sind, dass mindestens einer der Hohlkörper (21, 22; 21.2, 22.2; 21.3, 22.3) beim Aufprall komprimiert wird,
- mit einem ersten Sensor (31) und einem zweiten Sensor (32) zum Erfassen der Kompression des jeweils zugehörigen ersten bzw. zweiten Hohlkörpers (21, 22; 21.2, 22.2; 21.3, 22.3), wobei an jedem Sensor (31, 32) ein für die jeweilige Kompression repräsentatives Signal (ps₃₁, ps₃₂) abgreifbar ist, und
- mit einer Auswerteeinheit (4), der die beiden Signale (ps₃₁, ps₃₂) zuführbar sind,
**dadurch gekennzeichnet, dass** die Vorrichtung mindestens einen dem ersten Hohlkörper (21; 21.2; 21.3) zugeordneten ersten konstruktiven Parameter und mindestens einen dem zweiten Hohlkörper (22; 22.2; 22.3) zugeordneten zweiten konstruktiven Parameter aufweist, wobei mindestens einer der Parameter sich längs der Aufprallortsensierungsrichtung (y) ändert, so dass der Quotient (Q) der beiden Signale (ps₃₁, ps₃₂) bei einem Aufprall desselben Objekts mit gleicher Geschwindigkeit auf verschiedene Aufprallorte (a, b, c) längs der Aufprallortsensierungsrichtung (y) zunimmt oder abnimmt.

2. Vorrichtung nach Anspruch 1, **dadurch gekennzeichnet, dass** ein erster Parameter und/oder ein zweiter Parameter jeweils die Querschnittsfläche des ersten beziehungsweise des zweiten Hohlkörpers (21, 22; 21.2, 22.2; 21.3, 22.3), senkrecht zur Längsachse (21y, 22y) des Hohlkörpers (21, 22; 21.2, 22.2; 21.3, 22.3) ist.

3. Vorrichtung nach einem der vorherigen Ansprüche, **dadurch gekennzeichnet, dass** ein erster Parameter und/oder ein zweiter Parameter die Steifigkeit des ersten und/oder des zweiten Hohlkörpers (21, 22; 21.2, 22.2; 21.3, 22.3) längs der Aufprallortsensierungsrichtung (y) ist.

4. Fahrzeug (5) mit einer Vorrichtung zum Erkennen eines Aufpralls eines Objekts auf einen Aufprallortsensierungsbereich (Y) des Fahrzeugs (5), wobei die Vorrichtung
- einen ersten und einen zweiten im wesentlichen abgeschlossenen Hohlkörper (21.1, 22.1) aufweist,
- die mit einem Teil (6) der Fahrzeugkarosserie verbundenen sind,
- die mit ihrer Längsachse parallel zu einer Aufprallortsensierungsrichtung (y) und im Aufprallortsensierungsbereich einander überlappend angeordnet sind und
- die so nahe an der Außenfläche des Fahrzeugs (5) angeordnet sind, dass mindestens einer der Hohlkörper (21.1, 22.1) beim Aufprall komprimiert wird,
und wobei die Vorrichtung
- einen ersten Sensor (31) und einen zweiten Sensor (32) zum Erfassen der Kompression des jeweils zugehörigen ersten bzw. zweiten Hohlkörpers (21.1, 22.1) aufweist, wobei an jedem Sensor (31, 32) ein für die jeweilige Kompression repräsentatives Signal (ps₃₁, ps₃₂) abgreifbar ist,
und wobei die Vorrichtung
- eine Auswerteeinheit (4) aufweist, der die beiden Signale (ps₃₁, ps₃₂) zuführbar sind,
**dadurch gekennzeichnet, dass** das Fahrzeug mindestens einen dem ersten Hohlkörper zugeordneten ersten konstruktiven Parameter und mindestens einen dem zweiten Hohlkörper zugeordneten zweiten konstruktiven Parameter aufweist, wobei mindestens einer der Parameter sich längs der Aufprallortsensierungsrichtung (y) ändert, so dass der Quotient (Q) der beiden Signale (ps₃₁, ps₃₂) bei einem Aufprall desselben Objekts mit gleicher Geschwindigkeit auf verschiedene Aufprallorte (a, b, c) längs der Aufprallortsensierungsrichtung (y) zunimmt oder abnimmt.

5. Fahrzeug nach Anspruch 4, **dadurch gekennzeichnet, dass** ein erster und/oder ein zweiter Parameter die Steifigkeit des Teils (6) der Fahrzeugkarosserie im Aufprallortsensierungsbereich (Y) ist.

6. Fahrzeug nach Anspruch 4 oder 5, **dadurch gekennzeichnet, dass** ein erster und/oder ein zweiter Parameter ein erster Parameter und/oder ein zweiter Parameter der Abstand des ersten und/oder des zweiten Hohlkörpers (21.1, 22.1) von den Außenflächen des Teils (6) der Fahrzeugkarosserie im Aufprallbereich (Y) ist.

7. Fahrzeug nach einem der Ansprüche 4 bis 6, **dadurch gekennzeichnet, dass** der Teil (6) der Fahrzeugkarosserie im Aufprallbereich (Y), der mit den beiden Hohlkörpern (21.1, 22.1) verbunden ist, als Stoßfänger ausgebildet ist.

8. Fahrzeug nach einem der Ansprüche 4 bis 7, **dadurch gekennzeichnet, dass** der Teil der Fahrzeugkarosserie, der mit den beiden Hohlkörpern (21.1, 22.1) verbunden ist, einteilig mit dem Gehäuse mindestens eines der Hohlkörper (21.1, 22.1) ausgebildet ist.

9. Vorrichtung nach einem der Ansprüche 1 bis 3 oder Fahrzeug nach einem der Ansprüche 4 bis 8, **dadurch gekennzeichnet, dass** mindestens einer der Parameter entlang der Aufprallortsensierungsrichtung (y) stetig zunimmt oder abnimmt.

10. Vorrichtung nach einem der Ansprüche 1 bis 3 oder 9 oder Fahrzeug nach einem der Ansprüche 4 bis 9, **dadurch gekennzeichnet, dass** die Hohlkörper (21, 22; 21.1, 22.1; 21.2, 22.2; 21.3, 22.3) ein im wesentlichen gleiches Volumen aufweisen und/oder längs der Aufprallortsensierungsrichtung (y) im wesentlichen die gleiche Länge aufweisen.

11. Vorrichtung nach einem der Ansprüche 1 bis 3 oder 9 bis 10 oder Fahrzeug nach einem der Ansprüche 4 bis 10, **dadurch gekennzeichnet, dass** mindestens einer der Sensoren (31, 32) ein Drucksensor ist.

12. Vorrichtung oder Fahrzeug nach Anspruch 11, **dadurch gekennzeichnet, dass** der Drucksensor ein Absolutdrucksensor ist.

13. Verfahren zum Erkennen eines Aufpralls eines Objekts auf einen Aufprallortsensierungsbereich eines Fahrzeugs (5), bei dem ein Fahrzeug gemäß einem der Ansprüche 4 bis 12 eingesetzt wird oder zumindest eine Vorrichtung gemäß einem der Ansprüche 1 bis 3 oder 9 bis 10, bei dem die folgenden Verfahrensschritte ablaufen:
- mit einem ersten Sensor (31) und einem zweiten Sensor (32) wird die Kompression des jeweils zugehörigen ersten bzw. zweiten Hohlkörpers (21, 22; 21.1, 22.1; 21.2, 22.2; 21.3, 22.3) beim Aufprall erfasst,
- von dem ersten Sensor (31) und von dem zweiten Sensor (32) wird je ein für die jeweilige Kompression repräsentatives Signal (ps31, ps32) an eine zentrale Auswerteeinheit (4) übermittelt,
- die zentrale Auswerteeinheit (4) bildet einen Verhältniswert (V) aus den beiden Signalen (S31, S32),
- die Auswerteeinheit (4) ordnet dem Verhältniswert (V) einen Aufprallort (a, b, c) über einen in der Auswerteeinheit (4) gespeicherten funktionellen Zusammenhang zu.

14. Verfahren nach Anspruch 14,
bei dem der Verhältniswert (V) der Quotient (Q)
der beiden Signale (ps₃₁, ps₃₂) der beiden Sensoren (31, 32) ist oder der Quotient (Q) aus Werten, die von den beiden Signalen (ps₃₁, ps₃₂) der beiden Sensoren (31, 32) abgeleitet sind.

## Claims

1. Device for detecting a collision of an object on a collision location detection region (Y) of a vehicle (5)
- with a first and a second essentially enclosed hollow body (21, 22; 21.2, 22.2; 21.3, 22.3),
- which are connected to a part (6) of the vehicle bodywork,
- which are disposed with their longitudinal axis parallel to the collision location detection direction (y) and overlapping one another in the collision location detection region and
- which are disposed close to the external surface of the vehicle in such a way that at least one of the hollow bodies (21, 22; 21.2, 22.2; 21.3, 22.3) is compressed during the collision,
- with a first sensor (31) and a second sensor (32) for detecting the compression of the associated first and second hollow body (21, 22; 21.2, 22.2; 21.3, 22.3) respectively, a signal (ps₃₁, ps₃₂) indicative of the respective compression being able to be tapped off at each sensor (31, 32), and
- with an evaluator (4) to which the two signals (ps₃₁, ps₃₂) can be fed,
**characterised in that** the device has at least one first constructional parameter assigned to the first hollow body (21; 21.2; 21.3) and at least one second constructional parameter assigned to the second hollow body (22; 22.2; 22.3), at least one of the parameters varying along the collision location detection direction (y) so that the quotient (Q) of the two signals (ps₃₁, ps₃₂) increases or decreases in the event of a collision of the same object with identical velocity at different collision locations (a, b, c) along the collision location detection direction (y).

2. Device according to claim 1, **characterised in that** a first parameter and/or a second parameter is the cross-sectional surface area of the first and/or second hollow body (21, 22; 21.2, 22.2; 21.3, 22.3), perpendicular to the longitudinal axis (21y, 22y) of the hollow body (21, 22; 21.2, 22.2; 21.3, 22.3).

3. Device according to one of the preceding claims, **characterised in that** a first parameter and/or a second parameter is the stiffness of the first and/or the second hollow body (21, 22; 21.2, 22.2; 21.3, 22.3) along the collision location detection direction (y).

4. Vehicle (5) with a device for detecting a collision of an object on a collision location detection region (Y) of the vehicle (5), wherein the device
- has a first and a second essentially enclosed hollow body (21.1, 22.1),
- which are connected to a part (6) of the vehicle bodywork,
- which are disposed with their longitudinal axis parallel to a collision location detection direction (y) and overlapping one another in the collision location detection region and
- which are disposed close to the outer surface of the vehicle (5) in such a way that at least one of the hollow bodies (21.1, 22.1) is compressed during the collision,
and wherein the device
- has a first sensor (31) and a second sensor (32) for detecting the compression of the associated first and second hollow body (21.1, 22.1) respectively, a signal (ps₃₁, ps₃₂) indicative of the compression being able to be tapped off at each sensor (31, 32),
and wherein the device
- has an evaluator (4) to which the two signals (ps₃₁, ps₃₂) can be fed,
**characterised in that** the vehicle has at least one first constructional parameter assigned to the first hollow body and at least one second constructional parameter assigned to the second hollow body, at least one of the parameters varying along the collision location detection direction (y) so that the quotient (Q) of the two signals (ps₃₁, ps₃₂) increases or decreases in the event of a collision of the same object with identical velocity at different collision locations (a, b, c) along the collision location detection direction (y).

5. Vehicle according to claim 4, **characterised in that** a first and/or a second parameter is the stiffness of the part (6) of the vehicle bodywork in the collision location detection region (Y).

6. Vehicle according to claim 4 or 5, **characterised in that** a first and/or a second parameter is the distance of the first and/or the second hollow body (21.1, 22.1) from the outer surface of the part (6) of the vehicle bodywork in the collision region (Y).

7. Vehicle according to one of claims 4 to 6, **characterised in that** the part (6) of the vehicle bodywork in the collision region (Y) which is connected to the two hollow bodies (21.1, 22.1), is implemented as a bumper.

8. Vehicle according to one of claims 4 to 7, **characterised in that** the part of the vehicle bodywork which is connected to the two hollow bodies (21.1, 22.1) is implemented in one piece with the housing of at least one of the hollow bodies (21.1, 22.1).

9. Device according to one of claims 1 to 3 or vehicle according to one of claims 4 to 8, **characterised in that** at least one of the parameters continuously increases or decreases along the collision location detection direction (y).

10. Device according to one of claims 1 to 3 or 9 or vehicle according to one of claims 4 to 9, **characterised in that** the hollow bodies (21, 22; 21.1, 22.1; 21.2, 22.2; 21.3, 22.3) have essentially the same volume and/or essentially the same length along the collision location detection direction (y).

11. Device according to one of claims 1 to 3 or 9 to 10 or vehicle according to one of claims 4 to 10, **characterised in that** at least one of the sensors (31, 32) is a pressure sensor.

12. Device according to claim 11, **characterised in that** the pressure sensor is an absolute pressure sensor.

13. Method for detecting a collision of an object on a collision location detection region of a vehicle (5), wherein a vehicle according to one of claims 4 to 12 is used, or at least a device according to one of claims 1 to 3 or 9 to 10, and wherein the following steps are performed:
- in the event of collision, a first sensor (31) and a second sensor (32) are used to detect the compression of the associated first and second hollow body (21, 22; 21.1, 22.1; 21.2, 22.2; 21.3, 22.3) respectively,
- a signal (ps₃₁, ps₃₂) indicative of the respective compression is transmitted to a central evaluator (4) by the first sensor (31) and by the second sensor (32),
- the central evaluator (4) takes the ratio (V) of the two signals (S₃₁, S₃₂),
- the evaluator (4) assigns a collision location (a, b, c) to the ratio (V) via a functional relationship stored in the evaluator (4).

14. Method according to claim 14,
wherein the ratio value (V) is the quotient (Q) of the two signals (ps₃₁, ps₃₂) of the two sensors (31, 32) or the quotient (Q) of values which are derived from the two signals (ps₃₁, ps₃₂) of the two sensors (31, 32).

## Revendications

1. Dispositif pour la reconnaissance d'un impact d'un objet sur une zone de détection de point d'impact (Y) d'un véhicule (5) comprenant
- un premier et un second corps creux (21, 22 ; 21.2, 22.2 ; 21.3, 22.3) sensiblement fermé,
- lesquels sont reliés à une partie (6) de la carrosserie du véhicule,
- lesquels sont disposés avec leur axe longitudinal parallèlement à une direction de détection de point d'impact (y) et en se chevauchant dans la zone de détection du point d'impact et
- qui sont disposés si près de la surface extérieure du véhicule qu'au moins l'un des corps creux (21, 22 ; 21.2, 22.2 ; 21.3, 22.3) est comprimé lors de l'impact,
- un premier capteur (31) et un second capteur (32) pour l'enregistrement de la compression du premier ou du second corps creux (21, 22 ; 21.2, 22.2; 21.3, 22.3) respectif, sachant qu'un signal (ps₃₁, ps₃₂) représentatif de la compression respective puisse être prélevé sur chaque capteur (31, 32), et
- une unité d'analyse (4) à laquelle les deux signaux (ps₃₁, ps₃₂) peuvent être amenés,
**caractérisé en ce que** le dispositif présente au moins un premier paramètre de construction attribué au premier corps creux (21 ; 21.2 ; 21.3) et au moins un second paramètre de construction attribué au second corps creux (22, 22.2 ; 22.3), sachant qu'au moins l'un des paramètres varie le long de la direction de détection de point d'impact (y), sachant que le quotient (Q) des deux signaux (ps₃₁, ps₃₂) augmente ou décroît lors d'un impact du même objet avec une vitesse identique sur différents points d'impact (a, b, c) le long de la direction de détection du point d'impact (y).

2. Dispositif selon la revendication 1, **caractérisé en ce que** un premier paramètre et/ou un second paramètre est respectivement la surface de section du premier ou du second corps creux (21, 22 ; 21.2, 22.2 ; 21.3, 22.3), perpendiculairement à l'axe longitudinal (21y, 22y) du corps creux (21, 22 ; 21.2, 22.2 ; 21.3, 22.3).

3. Dispositif selon l'une quelconque des revendications précédentes, **caractérisé en ce qu'**un premier paramètre et/ou un second paramètre est la rigidité du premier et/ou du second corps creux (21, 22 ; 21.2, 22.2 ; 21.3, 22.3), le long de la direction de détection du point d'impact (y).

4. Véhicule (5) comprenant un dispositif pour la reconnaissance d'un impact d'un objet sur une zone de détection du point d'impact (Y) du véhicule (5), le dispositif
- présentant un premier et un second corps creux (21.1, 22.1) sensiblement fermé,
- lesquels sont reliés à une partie (6) de la carrosserie du véhicule,
- qui sont disposés avec leur axe longitudinal parallèlement à une direction de détection de point d'impact (y) et en se chevauchant dans la zone de détection du point d'impact et
- qui sont disposés si près de la surface extérieure du véhicule (5) qu'au moins l'un des corps creux (21.1, 22.1) est comprimé lors d'un impact,
et le dispositif
- comprenant un premier capteur (31) et un second capteur (32) pour l'enregistrement de la compression du premier ou du second corps creux (21.1, 22.1) respectif, un signal (ps₃₁, ps₃₂) représentatif de la compression respective pouvant être prélevé sur chaque capteur (31, 32), et
le dispositif
présentant une unité d'analyse (4) à laquelle les deux signaux (ps₃₁, ps₃₂) peuvent être amenés,
**caractérisé en ce que** le véhicule présente au moins un premier paramètre de construction attribué au premier corps creux et au moins un second paramètre de construction attribué au second corps creux, sachant qu'au moins l'un des paramètres varie le long de la direction de détection du point d'impact (y), de sorte que le quotient (Q) des deux signaux (ps₃₁, ps₃₂) augmente ou décroît lors d'un impact du même objet avec une vitesse identique sur différents points d'impact (a, b, c) le long de la direction de détection de point d'impact (y).

5. Véhicule selon la revendication 4, **caractérisé en ce qu'**un premier et/ou un second paramètre est la rigidité de la partie (6) de la carrosserie du véhicule dans la zone de détection du point d'impact (Y).

6. Véhicule selon la revendication 4 ou 5, **caractérisé en ce qu'**un premier et/ou un second paramètre est la distance du premier et/ou du second corps creux (21.1, 22.1) aux faces extérieures de la partie (6) de la carrosserie du véhicule dans la zone d'impact (Y).

7. Véhicule selon l'une quelconque des revendications 4 à 6, **caractérisé en ce que** la partie (6) de la carrosserie du véhicule est conçue comme pare-chocs dans la zone d'impact (Y) qui est reliée aux deux corps creux (21.1, 22.1).

8. Véhicule selon l'une quelconque des revendications 4 à 7, **caractérisé en ce que** la partie de la carrosserie du véhicule, qui est reliée aux deux corps creux (21.1, 22.1), est conçue d'une seule pièce partie avec le boîtier d'au moins l'un des corps creux (21.1, 22.1).

9. Dispositif selon l'une quelconque des revendications 1 à 3 ou véhicule selon l'une quelconque des revendications 4 à 8, **caractérisé en ce que** au moins l'un des paramètres augmente ou décroît constamment le long de la direction de détection de point d'impact (y).

10. Dispositif selon l'une quelconque des revendications 1 à 3 ou 9 ou véhicule selon l'une quelconque des revendications 4 à 9, **caractérisé en ce que** les corps creux (21, 22 ; 22.1, 22.1 ; 21.2, 22.2 ; 21.3, 22.3) présentent un volume sensiblement identique et/ou présentent sensiblement la même longueur le long de la direction de détection de point d'impact (y).

11. Dispositif selon l'une quelconque des revendications 1 à 3 ou 9 à 10 ou véhicule selon l'une quelconque des revendications 4 à 10, **caractérisé en ce qu'**au moins l'un des capteurs (31, 32) est un capteur de pression.

12. Dispositif ou véhicule selon la revendication 11, **caractérisé en ce que** le capteur de pression est un capteur de pression absolue.

13. Procédé de reconnaissance d'un impact d'un objet sur une zone de détection de point d'impact d'un véhicule (5), dans lequel un véhicule est utilisé selon l'une quelconque des revendications 4 à 12 ou au moins un dispositif selon l'une quelconque des revendications 1 à 3 ou 9 à 10, dans lequel les étapes de procédé suivantes se déroulent :
- avec un premier capteur (31) et un second capteur (32), on enregistre la compression du premier ou du second corps creux (21, 22 ; 22.1, 22.1 ; 21.2, 22.2 ; 21.3, 22.3) respectif lors de l'impact,
- le premier capteur (31) et le second capteur (32) transmettent chacun un signal (ps₃₁, ps₃₂) représentatif de la compression respective à une unité d'analyse (4) centrale,
- l'unité d'analyse (4) centrale forme une valeur de rapport (V) à partir des deux signaux (S31, S32),
- l'unité d'analyse (4) attribue à la valeur de rapport (V) un point d'impact (a, b, c) au moyen d'un rapport fonctionnel stocké dans l'unité d'analyse (4).

14. Procédé selon la revendication 14,
dans lequel la valeur de rapport (V) est le quotient (Q) des deux signaux (ps₃₁, ps₃₂) des deux capteurs (31, 32) ou le quotient provenant de valeurs qui sont déduites des deux signaux (ps₃₁, ps₃₂) des deux capteurs (31, 32).
